# EUROPEAN PATENT SPECIFICATION

(11) **EP 4 464 910 B1**
(45) Date of publication and mention of the grant of the patent: **18.03.2026**
(21) Application number: 22923619.5
(22) Date of filing: 27.12.2022
(51) Int. Cl.: F16D 3/221, F16D 3/20, F16N 7/36

(54) **LIGHTWEIGHT UNIVERSAL JOINT, SPLINED PAIR, AND PROPELLER SHAFT**
LEICHTES UNIVERSALGELENK, KEILPASSUNGSPAAR UND GETRIEBEWELLE
JOINT UNIVERSEL LÉGER, PAIRE D'AJUSTEMENT CANNELÉ ET ARBRE DE TRANSMISSION

(30) Priority: 28.01.2022 CN 202210106991
(43) Date of publication of application: 20.11.2024
(73) Proprietor: QINGDAO ACME INNOVATION TECHNOLOGY CO., LTD., Qingdao, Shandong 266000 (CN)
(72) Inventor: ZHU, Dewei, Qingdao, Shandong 266000 (CN); RONG, Xiaoyu, Qingdao, Shandong 266000 (CN); ZUO, Doudou, Qingdao, Shandong 266000 (CN)
(74) Representative: Bayramoglu et al.
(86) International application number: PCT/CN2022/142169
(87) International publication number: WO 2023/142833

(56) References cited:
- CN-A- 107 605 980
- CN-A- 107 605 980
- CN-A- 109 441 965
- CN-U- 204 782 821
- CN-U- 207 333 486
- CN-U- 213 176 523
- CN-U- 213 176 523
- CN-U- 213 744 582
- CN-U- 215 487 300
- CN-U- 215 487 300
- CN-Y- 2 259 525
- GB-A- 222 563
- US-A- 4 114 401
- US-A1- 2015 094 157
- US-A1- 2018 283 460
- US-A1- 2020 237 389

## Description

### TECHNICAL FIELD

The present disclosure relates to the field of automobile propeller shafts, and in particular to a lightweight universal joint, splined pair, and propeller shaft.

### BACKGROUND ART

The present application is a further optimization and improvement of Chinese patent technology CN202021793026.3 (date of application: August 20, 2020; and publication number: CN213176523U) made to meet the requirements of the automobile industry for lightweight propeller shafts. In order to achieve a lightweight goal, the propeller shafts in the prior art are typically made of lightweight materials such as aluminum alloy and carbon fiber to reduce the part weight. However, the lightweight materials are often expensive, increasing the cost of the propeller shaft, and increase the difficulty of production, resulting in complex processes. In addition to the technical shortcomings, there are quality risks in the connection between the carbon fiber and steel, that is, delamination is prone to occur between different materials, which reduces product strength and leads to quality accidents. Compared with traditional cross-shaft propeller shafts, in the Chinese patent technology CN202021793026.3, although the weight is reduced, the socket processing technology is complex, resulting in low processing efficiency, high processing costs, and difficulty in achieving standardization. In addition, due to the fact that the socket is a key load-bearing component and bears the function of transferring torque, the overall load on the socket is relatively large and the socket requires high structural strength. However, it is hard to further reduce the wall thickness and weight of the component. Due to the heavy weight, the socket cannot meet the requirements of automobile propeller shafts for mass production and lightweight. Besides, the socket bears enormous torque, which can easily cause deformation of the main structure of the socket, further affecting the fitting accuracy of the component. Therefore, a further structural optimization is needed to reduce weight, simplify processes, improve production efficiency and processing quality stability, enhance product performance, and reduce product costs. US 2015/0094157 A1 discloses a rotational connector device, which incorporatesa housing that is attached to a first shaft and an inner memberthat is disposed within the housing and connected to a second shaft. The first and second shaft may be at skewed angles with respect to each other. The housing and the inner member areslidably and rotationally connected to each other by way of awasher and pin to provide one-to-one rotational motion between the first and second shafts. In the prior art, the splined pair formed by the spline sleeve and the spline shaft of the propeller shaft features complex manufacturing processes and excessive weight, which creates a need for further improvement.

### CONTENT OF THE INVENTION

A main objective of the present disclosure is to provide a lightweight universal joint, splined pair, and propeller shaft to meet the requirements of the automobile industry for lightweight and standardization of propeller shafts, and to solve the problems existing in patent technology CN202021793026.3, such as high cost, complex processing technology, low processing efficiency, and inability to meet the requirements of mass production of automobile propeller shafts. The present disclosure optimizes the stress state and function of a universal joint and a socket. In this way, the main body of the socket no longer transfers torque, but mainly bears the function of sealing lubricating oil, thereby reducing the deformation of the socket under stress, improving the socket structure and process, reducing manufacturing difficulty, improving the socket processing efficiency, and reducing the socket weight and processing cost. The present disclosure optimizes the structure and process of the spline sleeve and spline shaft. The present disclosure adopts a large diameter and small wall thickness design, optimizing material distribution and maximizing material performance. Therefore, the present disclosure improves the spline bearing capacity, reduces spline stress and sliding friction, reduces spline wear, extends spline life, reduces the weight of the splined pair, simplifies the manufacturing process of the splined pair, improves production efficiency, reduces product costs, and improves product quality.

In order to solve the above problems in the existing propeller shafts, the present disclosure provides a lightweight universal joint as presented in the appended claims.

In the present disclosure, the main body of the socket is no longer used to transmit the transmission torque, but is mainly used to provide a closed lubrication space for other transmission components inside the socket. The present disclosure thoroughly improves the stress state of the universal joint and solves the technical problems existing in the prior art. That is, the main structure of the socket of a traditional universal joint needs to be used to transfer the torque, and the overall stress on the socket is relatively large, which can easily cause deformation of the socket structure due to the large torque. Besides, the fixed wings are connected to an external component. The fixed wings can be adjusted to adapt to a change in the connection size of the external component. Therefore, changes in the external connection size no longer affect the structure of the socket, thereby achieving standardized mass production of the core component ball and adapting to the requirements of automobile mass production.

The present disclosure further provides a lightweight splined pair as presented in the appended claims.

In the prior art, the splined pair is usually designed with a small diameter and a large wall thickness. By appropriately increasing a spline pitch diameter and reasonably reducing the wall thickness, the present disclosure optimizes the diameter and wall thickness of the spline shaft and the spline sleeve, thereby optimizing material distribution, reducing materials used, and maximizing material performance. Through the large diameter and small wall thickness design, the present disclosure improves the bearing capacity of the spline, reduces spline stress and sliding friction, reduces spline wear, extends spline life, and improves spline performance. In addition, the present disclosure adapts to advanced cold forming and chipless or partial chipless machining processes, reduces product costs, and improves product quality.

The present disclosure further provides a lightweight propeller shaft as presented in the appended claims.

The present disclosure has the following beneficial effects.
1. The socket and the splined pair of the lightweight propeller shaft are integrated thin-walled structures, achieving chipless or partial chipless machining, and greatly improving production efficiency and quality stability. The present disclosure reduces the weight by about 40-70%, saving a large amount of steel, adapting to the lightweight development requirements of automobile components, greatly improving product performance, and reducing vibration and noise of the propeller shaft.
2. The socket is connected to an external component through the fixed wings. When the connection size of the external component changes, the fixed wings can be adjusted to adapt to this change. Therefore, changes in the external connection size no longer affect the structure of the socket, thereby achieving standardized mass production of the socket and adapting to the requirements of automobile mass production.
3. The present disclosure thoroughly improves the stress state of the universal joint through a structural optimization design, such that torque transfer is mainly completed through the fixed wings, bearings, the straight shaft, rolling elements, and the ball. The main structure of the socket no longer bears the task of torque transfer, but the socket mainly serves as an oil storage seal. The present disclosure fundamentally reduces the load on the socket, realizes the lightweight structural design of the socket by injection molding or punch, saves materials used, improves product performance and quality, and reduces costs.
4. The socket is made by injection molding and the splined pair is made by cold forming, eliminating the complex cutting process and improving the processing quality of parts, saving a lot of processing costs and extending the product life.
5. The lubricating oil is uniformly distributed on the inner surface of the spline part of the spline shaft through the lubrication structure design of the spline oil storage cylinder. Under the action of centrifugal force, the lubricating oil is evenly and reliably distributed on the sliding surface of the splined pair through, preventing eccentricity caused by the accumulation or deviation of the lubricating oil from one side from affecting the dynamic balance of the propeller shaft, and improving the utilization of the lubricating oil.
6. The positioning spherical surface of the straight shaft is fit with the constraint surface in the middle part of the transmission hole of the ball, such that the pulling-out force of the ball received by the ball acts on the positioning spherical surface of the straight shaft. The present disclosure effectively reduces the centering load on the socket such that the universal joint bears a larger pulling-out force of the ball, enhancing the centering ability, effectively protecting the socket, and extending the service life of the socket.
7. Through the limiting mechanisms of the rolling elements, the axial forces received by the rolling elements are transferred to the straight shaft. In addition, due to the symmetrical arrangement of the rolling elements, the axial forces become a pair of balance forces with equal magnitude and opposite directions acting on the straight shaft. The design avoids damage of the forces to other components, making the overall structure of the universal joint more evenly and reasonably stressed.
8. The axial support mechanisms at the two ends of the straight shaft provide axial support for the straight shaft. Further, the rolling elements provide axial support and centering for the ball, and share the support force of the socket on the ball, improving the ability of the universal joint to resist vibration and wear.
9. The present disclosure solves the problems of high cost, complex process, and quality hazards in existing high-end propeller shafts such as aluminum alloy/carbon fiber propeller shafts.
10. The present disclosure breaks through the limitations of the prior art in terms of structure and manufacturing process, subverts the design ideas and process routes of propeller shafts in the prior art, and opens up a new design concept and development direction for propeller shafts.

### BRIEF DESCRIPTION OF THE DRAWINGS

FIG. 1 is a front view of a first implementation solution of a lightweight universal joint according to the present disclosure;
FIG. 2 is a section view taken along line E-E shown in FIG. 1;
FIG. 3 is a structural diagram where a cap shown in FIG. 2 is equivalently replaced with a snap ring and a steel sphere;
FIG. 4 is a structural diagram where a limiting mechanism formed by a retaining ring shown in FIG. 2 is equivalently replaced with a bolt;
FIG. 5 is a section view taken along line F-F shown in FIG. 1;
FIG. 6 is an enlarged view of part A shown in FIG. 1;
FIG. 7 is a three-dimensional schematic diagram of a ball, where a shank of the ball is provided with splines;
FIG. 8 is a three-dimensional assembly diagram of the lightweight universal joint shown in FIG. 1;
FIG. 9 is a three-dimensional structural diagram of a socket shown in FIG. 1, where (a) is a front-view three-dimensional diagram of the socket, and (b) is a rear-view three-dimensional diagram of the socket;
FIG. 10 is a three-dimensional structural diagram of a fixed wing shown in FIG. 1, where (a) is a top-view three-dimensional diagram of the fixed wing, and (b) is a bottom-view three-dimensional diagram of the fixed wing;
FIG. 11 is a structural diagram of a second implementation solution of the lightweight universal joint;
FIG. 12 is a section view taken along line B-B shown in FIG. 11;
FIG. 13 is a structural diagram where a wear-resistant pad serves as an axial support mechanism;
FIG. 14 is a structural diagram where a bolt serves as a limiting mechanism;
FIG. 15 is a section view taken along line C-C shown in FIG. 11;
FIG. 16 is a section view taken along line D-D shown in FIG. 11;
FIG. 17 is a three-dimensional structural diagram of a socket shown in FIG. 11, where (a) is a bottom-view three-dimensional diagram of the socket, and (b) is a top-view three-dimensional diagram of the socket;

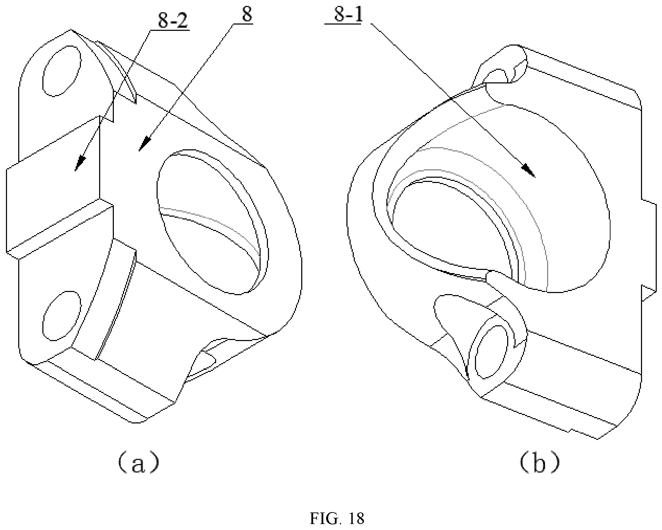

FIG. 18 is a three-dimensional structural diagram of a fixed wing shown in FIG. 11, where (a) is a top-view three-dimensional diagram of the fixed wing, and (b) is a bottom-view three-dimensional diagram of the fixed wing;
FIG. 19 is a three-dimensional structural diagram of the lightweight universal joint shown in FIG. 11, where the fixed wing is removed;
FIG. 20 is a structural diagram of a third implementation solution of the lightweight universal joint;
FIG. 21 is a section view taken along line H-H shown in FIG. 20;
FIG. 22 is a first three-dimensional schematic diagram of a spline shaft and a spline sleeve, where (a) is a three-dimensional schematic diagram of the spline shaft, and (b) is a three-dimensional schematic diagram of the spline sleeve;
FIG. 23 is a second three-dimensional schematic diagram of the spline shaft and the spline sleeve, where (a) is a three-dimensional schematic diagram of the spline shaft, and (b) is a three-dimensional schematic diagram of the spline sleeve;
FIG. 24 is a structural diagram of a first implementation solution of a propeller shaft;
FIG. 25 is a structural diagram of a second implementation solution of the propeller shaft;
FIG. 26 is a section view taken along line Q-Q shown in FIG. 24, where the spline shaft and the spline sleeve are those shown in FIG. 22;
FIG. 27 is a section view taken along line J-J shown in FIG. 24;
FIG. 28 is a section view taken along line K-K shown in FIG 25, where the spline shaft and the spline sleeve are those shown in FIG. 23;
FIG. 29 is a section view taken along line L-L shown in FIG. 28;
FIG. 30 is a structural diagram of a third implementation solution of the propeller shaft;
FIG. 31 is a third three-dimensional schematic diagram of the spline shaft and the spline sleeve, where (a) is a three-dimensional schematic diagram of the spline shaft, and (b) is a three-dimensional schematic diagram of the spline sleeve; and
FIG. 32 is a structural diagram of a fourth implementation solution of the propeller shaft.

### SPECIFIC IMPLEMENTATIONS

The present disclosure will be further described below with reference to the drawings.

### Embodiment 1

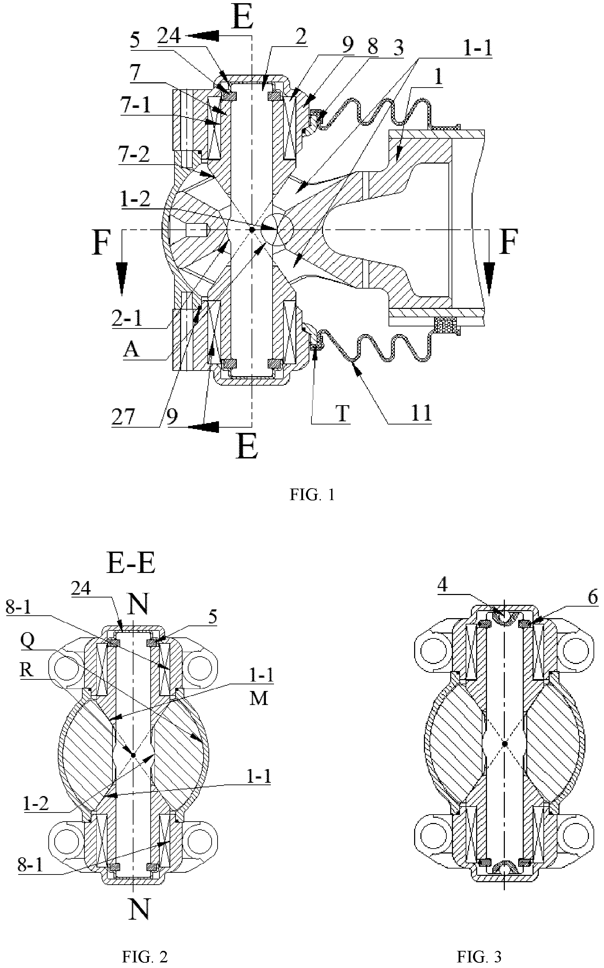

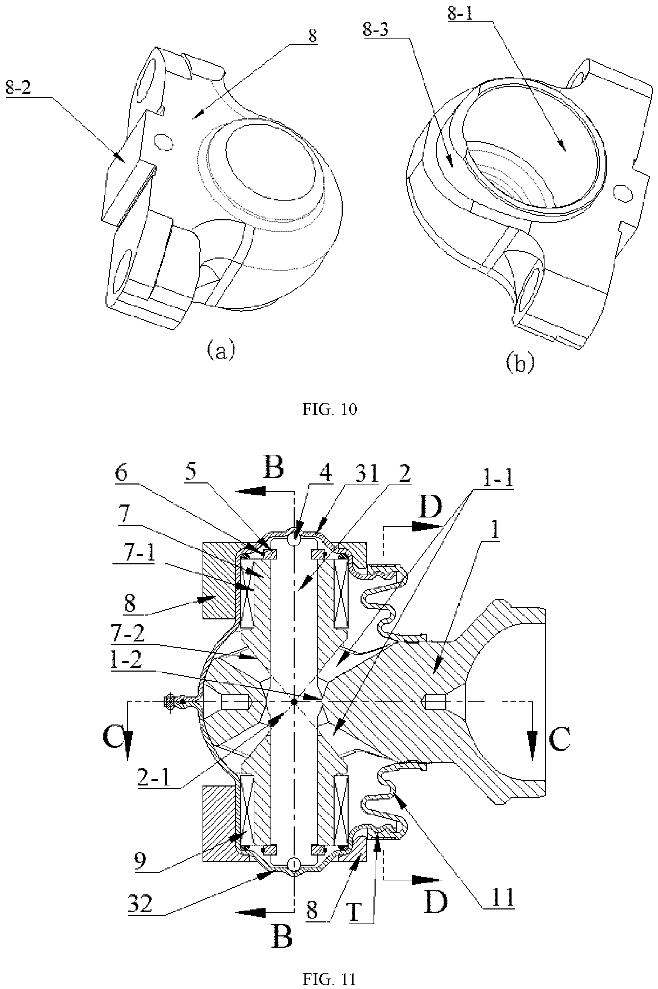

As shown in FIGS. 1, 11, and 20, the present disclosure provides a lightweight universal joint, including socket 3, ball 1, and straight shaft 2. The socket 3 is a thin-walled structure with a wall thickness of 0.2 mm-5 mm, and the ball 1 is rotatably provided in the socket 3. The ball 1 is provided with a transmission hole, and the straight shaft 2 runs through the transmission hole. Two ends of the socket 3 are externally connected to fixed wings 8 for transferring a torque, respectively. As shown in FIG. 10, each of the fixed wings 8 is provided with carrying hole 8-1 and transmission key 8-2.

Specifically, the ball 1 is rotatably provided in the socket 3, and is rotatably provided on the straight shaft 2 through the transmission hole. The socket is provided with inner spherical surface Q, and an outer surface of the ball 1 is concentrically rotatably fit with the inner spherical surface Q of the socket 3. The two ends of the socket 3 are respectively provided with the fixed wings 8. The transmission key 8-2 of the fixed wing 8 is connected to an input or output port of a transmission system. The fixed wing 8 receives a torque transferred from an end of the straight shaft and transfers the torque to the transmission system connected to the transmission key 8-2 through the transmission key. Alternatively, the fixed wing 8 receives a torque transferred from the transmission system connected to the transmission key 8-2 through the transmission key and transfers the torque to an end of the straight shaft, and then the straight shaft transfers the torque to the ball 1, achieving power transmission of the universal joint. In this power transmission method, a main body of the socket 3 no longer transfers the transmission torque, but mainly provides a closed lubrication space for other transmission components inside the socket 3. Therefore, the present disclosure solves the technical problem existing in the prior art by arranging the fixed wings at the two ends of the socket 3 for transferring the torque. That is, the main structure of the socket of the traditional universal joint needs to transfer the torque, resulting in a large overall stress on the socket 3, and making the structure of the socket prone to deformation due to the large torque. Therefore, the present disclosure thoroughly improves the stress state of the universal joint. Besides, the fixed wings are connected to an external component. The fixed wings can be adjusted to adapt to a change in the connection size of the external component. Therefore, changes in the external connection size no longer affect the structure of the socket, thereby achieving standardized mass production of the core component ball and adapting to the requirements of automobile mass production.

In the present disclosure, the socket is a thin-walled structure with a wall thickness of 0.2 mm-5 mm. The socket of the thin-walled structure is made through chipless or partial chipless machining processes such as injection molding, compression molding, or stretching molding, simplifying manufacturing. The main structure of the socket of the traditional universal joint needs to transfer the torque, so the socket must have a large wall thickness to ensure structural strength, and the processing cost of the traditional socket is high. The present disclosure reduces the wall thickness of the socket and significantly reduces the weight of the components. In the present disclosure, the lightweight universal joint thoroughly improves the stress state of the universal joint through a structural optimization design, such that torque transfer is mainly completed through the fixed wings, bearings, the straight shaft, rolling elements, and the ball, and the socket mainly serves as an oil storage seal. The present disclosure fundamentally reduces the load on the socket, realizes the lightweight structural design of the socket, saves materials, improves product performance and quality, and reduces costs.

Further, as shown in FIGS. 1, 11, and 20, in the present disclosure, the universal joint further includes rolling elements 7. The rolling elements 7 each include conical surface 7-2 and fixing surface 7-1. The transmission hole of the ball 1 passes through the ball and is symmetrically arranged along central planes C-C, F-F, and N-N of the ball. An axis of the transmission hole passes through a center of the ball 1, and two ends of the transmission hole form raceway surfaces 1-1, respectively. The rolling elements 7 are symmetrically and coaxially arranged on the straight shaft 2. The conical surface 7-2 of the rolling element 7 is fit with the raceway surface 1-1 of the transmission hole of the ball 1, along straight-line contact generatrix M. An extension line of the contact generatrix M passes through the center R of the ball 1, and the rolling element 7 is configured to roll around the center of the ball 1 along a surface of the raceway surface 1-1 of the transmission hole. The two symmetrically arranged rolling elements 7 serve as inner rings of the bearings. They are respectively fit with the bearings 9 at two ends of the straight shaft through the fixing surfaces 7-1, and are further fixed in bearing hole G of the socket 3 or the carrying holes of the fixed wings through the bearings 9. The inner spherical surface Q of the socket 3 is fit with and wrapped around an outer spherical surface of the ball 1.

Further, as shown in FIGS. 1, 11, and 20, the socket 3 is further provided with sealing port T. One end of dust cover 11 is connected to the sealing port T of the socket 3, and the other end of the dust cover 11 is fixed to and wrapped around a shank of the ball 1 (including an extension part fixedly connected to the ball 1, such as a shaft tube) or a spline sleeve, thereby forming a sealed space between the dust cover and the socket. The ball part of the ball 1, the rolling elements, the straight shaft, and the bearings are wrapped and sealed together, and lubricated with grease.

Further, as shown in FIGS. 2 to 4 and 12 to 14, limiting mechanisms are provided at the two ends of the straight shaft for axially limiting the rolling elements 7.

FIGS. 2, 3, 12, and 13 illustrate an implementation of the limiting mechanisms. The limiting mechanisms each include a retaining ring groove and retaining ring 5. The retaining ring grooves are located at the two ends of the straight shaft 2, and the retaining ring 5 is clamped inside the retaining ring groove.

Further, the retaining ring is an open elastic retaining ring, which, after assembly, is clamped and fixed in the retaining ring groove of the straight shaft by the elasticity of the retaining ring itself.

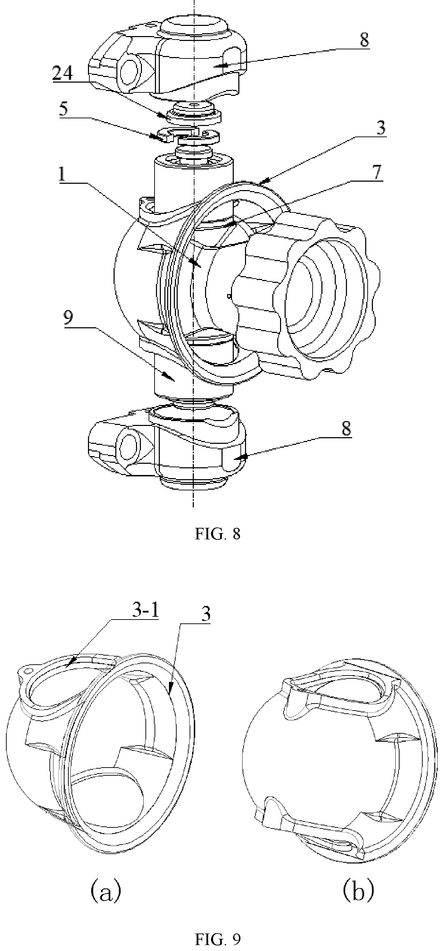

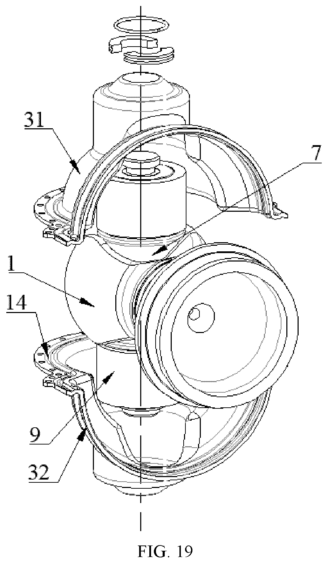

Further, as shown in FIG. 8, for the convenience of assembly, the retaining rings 5 are opposite semi-circular structures. The paired retaining rings 5 form a complete circular retaining ring and are clamped in the retaining ring grooves at the two ends of the straight shaft 2. The two paired semi-circular retaining rings 5 can be tightly clamped together through clamping devices to prevent the retaining rings 5 from coming out of the retaining ring grooves of the straight shaft 2. As shown in FIGS. 1 and 8, the clamping devices are caps 24. The caps 24 are sleeved at the ends of the straight shaft and constrain the two paired semi-circular retaining rings 5 in cylindrical inner chambers of the caps 24. As shown in FIGS. 11 to 13 and 19, the clamping devices are snap rings 6. An outer circular surface of the retaining ring 5 is provided with a ring groove. The snap ring 6 is nested in the ring groove of the retaining ring 5, and the two paired semi-circular retaining rings 5 are tightly clamped together. Similarly, the snap rings 6 can also be iron wires to wrap and tighten the two paired retaining rings 5 together. The caps 24 can also be circular tubular structures with openings at the two ends, which will not be elaborated herein. The limiting structures clamp the symmetrically arranged rolling elements 7 between the retaining rings 5 at the two ends of the straight shaft 2, in order to limit the outward movement of the rolling element 7 along the axis of the straight shaft and bear axial forces generated by transmission of the rolling elements along the axis of the straight shaft. Of course, the retaining rings 5 can also be equivalently replaced with other structures such as retaining pillars and baffles.

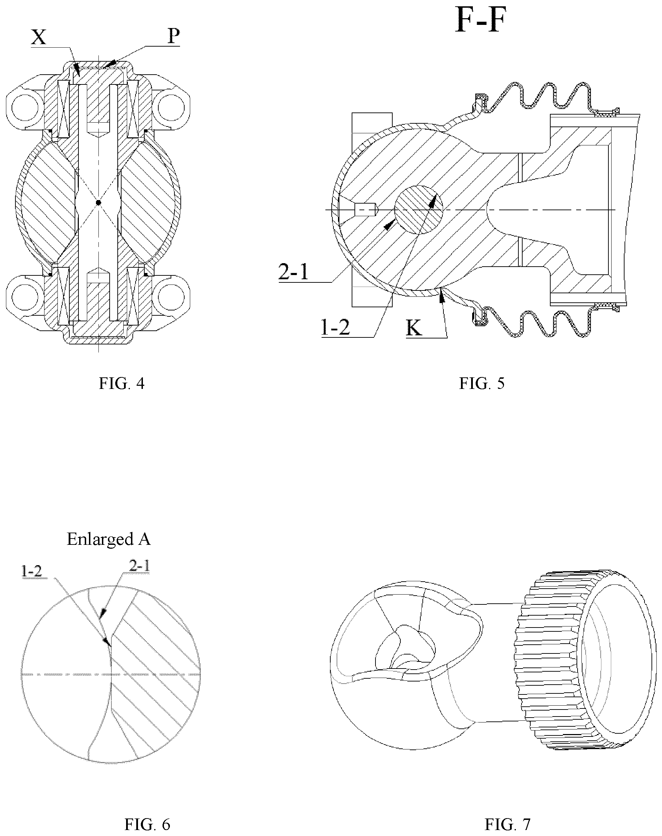

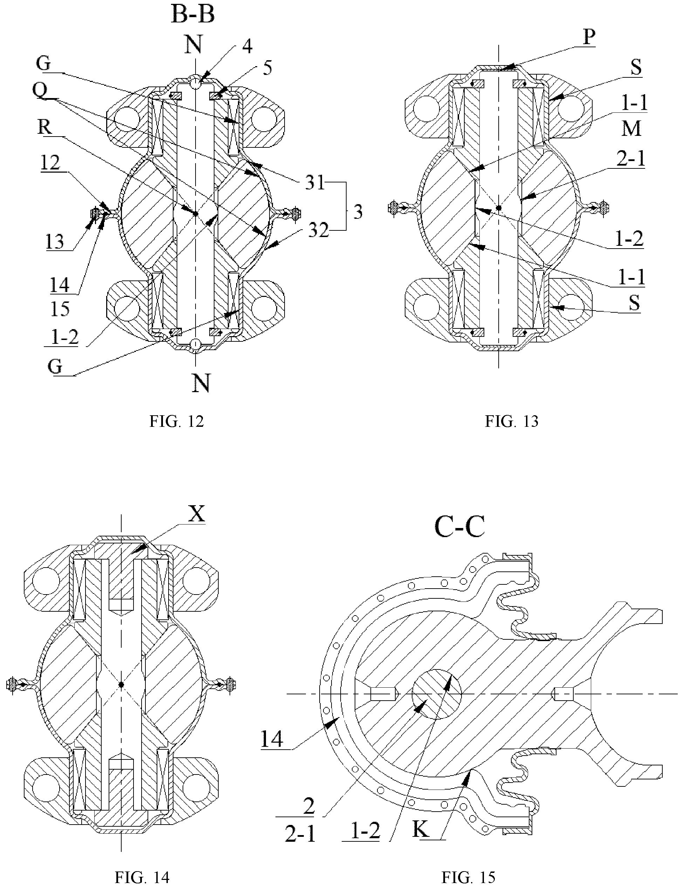

FIGS. 4 and 14 illustrate another implementation of the limiting mechanisms. The limiting mechanisms each include bolts X and internal threads provided at the two ends of the straight shaft 2, where the bolts X are fixed to the two ends of the straight shaft 2 through the internal threads, respectively. Alternatively, the limiting mechanism includes nuts and external threads provided at the two ends of the straight shaft 2, where the nuts are fixed to the two ends of the straight shaft 2 through the external threads, respectively. Specifically, the two ends of the straight shaft 2 are provided with the internal or external threads, and the bolts or the nuts are screwed and fixed to the threads at the two ends of the straight shaft, respectively. In this way, the symmetrically arranged rolling elements 7 are clamped between the bolts or nuts at the two ends of the straight shaft, thereby limiting the outward movement of the rolling elements 7 along the axis of the straight shaft and bearing the axial forces generated by the transmission of the rolling elements along the axis of the straight shaft.

Through the limiting mechanisms, the axial forces generated by the transmission of the rolling elements are transferred to the straight shaft. In addition, due to the symmetrical arrangement of the rolling elements, the axial forces become a pair of balance forces with equal magnitude and opposite directions acting on the straight shaft. The design avoids damage of the forces to other components, making the overall structure of the universal joint more evenly and reasonably stressed. After bearing the axial tensile forces, the ability of the straight shaft to withstand bending torsion is improved, thereby improving its stress state.

Further, as shown in FIGS. 5 and 15, the socket 3 is provided with lip K, and a diameter of the lip K is smaller than a diameter of the ball.

Preferably, a wall thickness of the socket is 0.2 mm-5 mm.

Further, as shown in FIGS. 1, 6, and 11, a middle part of the straight shaft 2 is provided with positioning spherical surface 2-1, and a middle part of the transmission hole of the ball is provided with constraint surface 1-2. After the straight shaft 2 passes through the transmission hole of the ball, its positioning spherical surface 2-1 is fit with the constraint surface 1-2 of the transmission hole, and the constraint surface 1-2 restricts a position of the positioning spherical surface 2-1. As shown in FIG. 6, the positioning spherical surface 2-1 is a spherical surface protruding from an outer surface of the straight shaft 2.

The positioning spherical surface 2-1 of the straight shaft is fit with the constraint surface 1-2 in the middle part of the transmission hole of the ball, such that the straight shaft directly bears the pulling-out force of the ball, enhancing the centering ability, effectively protecting the socket, and extending the service life of the socket.

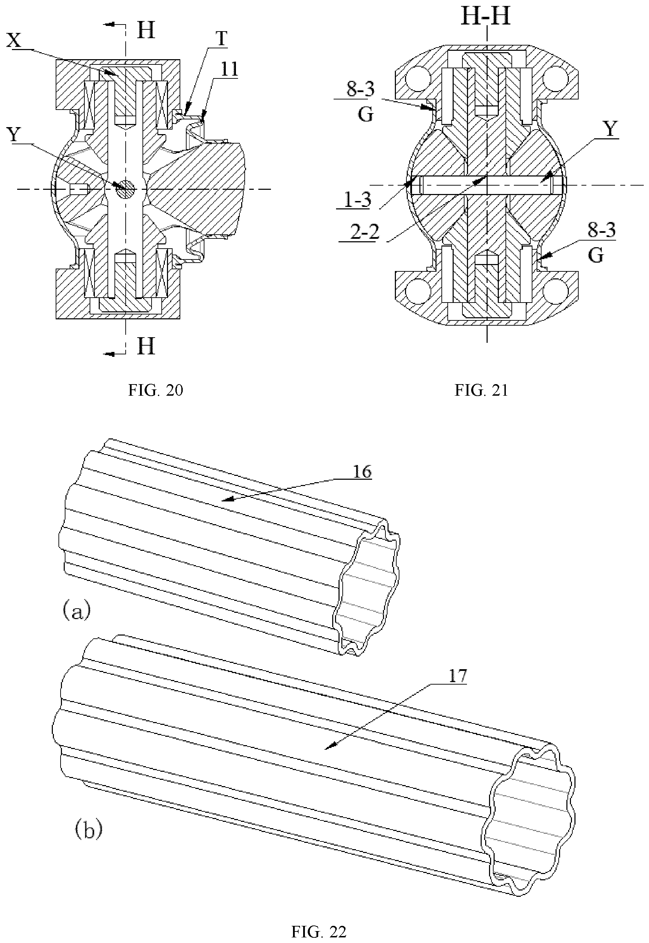

Further, as shown in FIGS. 20 and 21, hinge pin Y is provided. The middle part of the straight shaft 2 is provided with hinge hole 2-2, and an axis of the hinge hole 2-2 intersects vertically with the axis of the straight shaft 2. The ball 1 is provided with fixing hole 1-3, and an axis of the fixing hole 1-3 passes through the center R of the ball 1 and is perpendicular to the central plane C-C of the ball. The hinge pin Y passes through the fixing hole 1-3 of the ball and is hinged to the hinge hole 2-2 of the straight shaft. The straight shaft can swing around an axis of the hinge pin Y in the transmission hole of the ball. The structural arrangement of the hinge pin further enhances the centering effect.

Further, axial support mechanisms are provided at the two ends of the straight shaft 2. As shown in FIGS. 2 to 4 and 11 to 14, the axial support mechanisms are caps 24, steel spheres, or wear-resistant pads P. It should be noted that when the axial support mechanisms are caps 24, the caps 24 serve as both the clamping devices of the semi-circular retaining rings 5 and the axial support mechanisms. Specifically, as shown in FIGS. 11 to 14, the steel sphere or wear-resistant pad P is provided between the end of the straight shaft 2 and a bottom of the bearing hole G. Alternatively, as shown in FIGS. 2 to 4, the steel sphere or wear-resistant pad P is provided between the end of the straight shaft 2 and a top of the inner chamber of the fixed wing 8 for axial support of the straight shaft.

The axial support mechanisms, namely the steel spheres 4 or the wear-resistant pads P, located at the two ends of the straight shaft provide axial support for the straight shaft. Further, the rolling elements provide axial support and centering for the ball, and share the support force of the socket on the ball, improving the ability of the universal joint to resist vibration and wear.

The positioning spherical surface 2-1 of the straight shaft is combined with the axial support mechanisms, the limiting mechanisms, and the rolling elements 7 at the two ends of the straight shaft 2 to jointly constrain and position the ball to maintain the correct fitting position.

### Embodiment 2

As shown in FIGS. 11 to 17 and 19, the socket 3 is a split type thin-walled structure, divided into two parts: socket I 31 and socket II 32. The socket I 31 and the socket II 32 are symmetrically arranged and hermetically connected to form a space for accommodating a portion of the ball 1, the straight shaft 2, the rolling elements 7, and the bearings. Each of the socket I 31 and the socket II 32 is provided with inner spherical surface Q, bearing holes G, and fixed cylinders S. The fixed wing 8 is wrapped around and clamps the fixed cylinder S of the corresponding socket through the carrying hole 8-1. The transfer of the torque is transitioned through the fixed cylinder S, such that the main body of the socket no longer bears the function of transferring the torque.

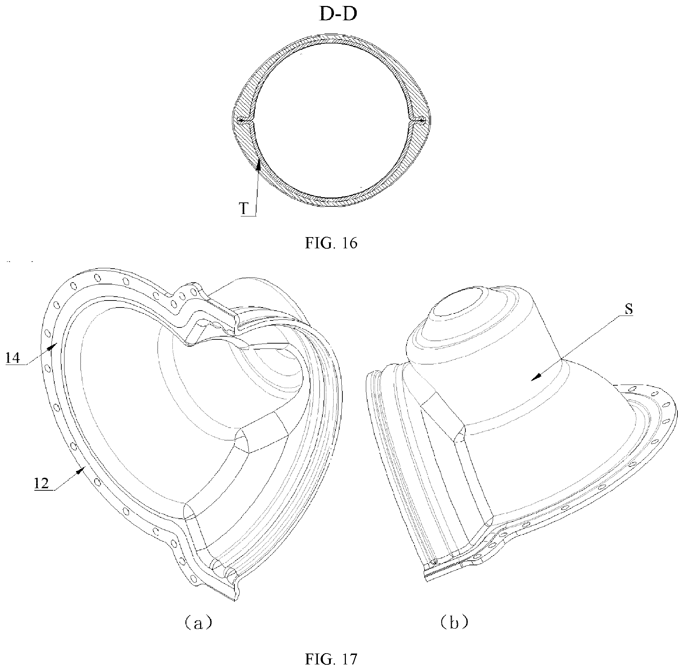

Preferably, the socket I 31 and the socket II 32 are integrated thin-walled parts that are symmetrically arranged along the central plane C-C of the ball. As shown in FIG. 17, each of the socket I 31 and the socket II 32 is further provided with sealing and fixing surface 12. The sealing and fixing surfaces 12 fixedly connect the socket I 31 and the socket II 32 to form the integrated socket. In an implementation, the sealing and fixing surface 12 is further provided with sealing groove 14. The sealing groove 14 is a circular groove recessed from a surface of the sealing and fixing surface. After the sealing and fixing surfaces 12 of the socket I 31 and the socket II 32 are fitted and fixed together, the sealing grooves 14 of the socket I 31 and the socket II 32 enclose a sealing chamber. Sealing ring 15 is provided in the sealing chamber. The sealing ring 15 is compressed by the sealing grooves 14 of the socket I 31 and the socket II 32, forming a seal between the sealing and fixing surfaces of the socket I 31 and the socket II 32, and together with the dust cover 11, forming a complete sealing structure of the universal joint. Of course, a concave-convex sealing fit can also be formed between the sealing and fixing surface 12 of the socket I 31 and the sealing and fixing surface 12 of the socket II 32 (such as a sealing fit achieved through a protrusion provided on one sealing and fixing surface and a groove provided on the other sealing and fixing surface), a flat sealing fit (such as through a sealing gasket or a sealant between the two sealing and fixing surfaces), etc.

Preferably, the fixed connection of the sealing and fixing surfaces of the socket I 31 and the socket II 32 can be achieved by riveting with rivet 13, fixed connection by a bolt, or welding, etc. as needed.

### Embodiment 3

As shown in FIGS. 1 to 5, 8, and 9, the socket 3 is an integrated thin-walled structure. That is, the main body of the socket is an integrated thin-walled structure. Insertion holes 3-1 are symmetrically arranged at two ends of the socket 3, and the fixed wings 8 are further provided with insertion openings 8-3. The insertion openings 8-3 of the fixed wings 8 are sealed and inserted into the insertion holes 3-1 of the socket. Preferably, an opening portion of the insertion hole 3-1 is provided with an oil seal groove. Sealing ring 27 is compressed between the oil seal groove and the insertion opening to form a reliable seal (as shown in FIG. 1). The carrying hole 8-1 of the fixed wing 8 is configured to support and fix the bearing 9.

The main body of the socket 3 can be integrally formed by a thin steel plate or made of non-metallic materials such as resin, nylon, and plastic.

When the socket 3 is made of an elastic material, a steel skeleton can be embedded in the insertion holes 3-1 of the socket 3, such that the socket 3 with the main body made of the elastic material can be integrated with the steel skeleton. In this way, the insertion holes 3-1 are rigid and form an interference fit with the insertion openings 8-3 of the fixed wings 8, improving the sealing performance and reliability of the connection. Further, the insertion holes 3-1 of the socket 3 need to be firmly connected to the insertion openings 8-3 of the fixed wings 8 and fixed by clamps or other means.

Preferably, the sealing port T of the socket is fixedly connected to the dust cover 11. The socket and the dust cover are manufactured as two separate parts, and the sealing port T of the socket and a connection port of the dust cover 11 are fixed together by clamps or other means. Alternatively, the dust cover and the socket are integrated into a one-piece part.

As shown in FIG. 20, when the socket and the dust cover 11 are integrally formed and made of a soft elastic material, the insertion holes 3-1 of the socket can be embedded with a steel skeleton to increase the stiffness of the bearing hole of the socket, making assembly convenient.

### Embodiment 4

As shown in FIGS. 22, 24, 26, and 27, a lightweight splined pair includes spline shaft 16 and spline sleeve 17. The spline shaft 16 and the spline sleeve 17 are thin-walled structures. The spline shaft 16 and the spline sleeve 17 form a sliding splined pair through concave and convex shapes of fitting surfaces. By appropriately increasing a spline pitch diameter and reducing the wall thickness, the present disclosure optimizes the diameter and wall thickness of the spline shaft and the spline sleeve, thereby optimizing material distribution, improving the bearing capacity of the spline, and reducing the stress and sliding friction of the spline.

Further, the splined pair includes spline oil storage cylinder 22. The spline oil storage cylinder 22 is nested in an inner chamber of the spline shaft 16. The spline shaft includes one end fixedly connected to the ball and the other end connected to one end of the spline oil storage cylinder, and the other end of the spline oil storage cylinder is connected to the ball. In this way, oil storage chamber 23 is formed between the spline oil storage cylinder 22, the spline shaft 16, and the ball. The spline shaft 16 is provided with a plurality of oil distribution holes 16-2. The oil distribution holes 16-2 are communicated with the oil storage chamber 23. Lubricating oil is stored in the oil storage chamber. When the propeller shaft rotates at high speed, the lubricating oil in the oil storage chamber can reach the sliding fitting surfaces of the spline shaft and the spline sleeve through the oil distribution holes of the spline shaft under the action of centrifugal force, thereby lubricating the splined pair.

Specifically, the spline shaft 16 and the spline sleeve 17 are thin-walled structures. By cold drawing or compression molding on thin-walled circular tubes, concave and convex spline structures are formed on the surfaces of the tubes, thereby forming the sliding splined pair. The splined pair includes one end fit and reinforced by welding with a shank spline on the ball of one universal joint through the spline shaft and the other end fit and reinforced by welding with the shank spline on the ball of the other universal joint ball through the spline sleeve, thereby connecting the two universal joints together through the splined pair. When a distance between the two universal joints changes, the spline shaft of the splined pair is configured to slide and retract in the spline sleeve to adapt to the change in the length of the propeller shaft. FIG. 7 shows the shank spline on the ball, which is fit with the spline on the mating portion of the corresponding spline shaft and spline sleeve. The figure shows conventional involute splines as an example.

In the present disclosure, the splined pair is an integrated thin-walled structure. The design eliminates the original complex cutting process, improves the processing quality of the parts, and saves a lot of processing costs. In addition, due to the significant reduction in weight, the splined pair can achieve surface nitriding treatment at a low cost, greatly improving the wear resistance of parts and prolonging product life.

In the present disclosure, the lubricating oil is uniformly distributed on the inner surface of the spline part of the spline shaft through the lubrication structure design of the spline oil storage cylinder. Under the action of centrifugal force, the lubricating oil is evenly and reliably distributed to the sliding surface of the splined pair through the oil distribution holes of the spline shaft, improving the utilization and lubrication effect of the lubricating oil, and preventing eccentricity caused by the accumulation or deviation of the lubricating oil from one side from affecting the dynamic balance of the propeller shaft.

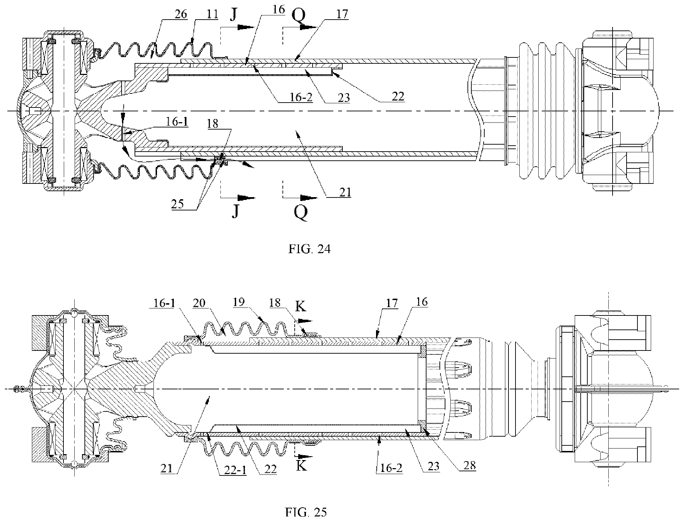

As shown in FIG. 24, the splined pair is provided with dust cover 11. One end of the dust cover 11 is fixedly connected to the sealing port T of the main body of the socket, and the other end of the dust cover 11 is connected to the spline sleeve 17.

The end of the dust cover 11 connected to the spline sleeve 17 is further provided with vent hole 25 and filter 18. The ball is provided with exhaust hole 16-1. The exhaust hole 16-1 includes one end communicated with inner chamber 26 of the dust cover 11 and the other end communicated with central chamber 21 of the splined pair. Air in the central chamber 21 of the splined pair is connected to the inner chamber 26 of the dust cover 11 through the exhaust hole 16-1 of the ball. Further, the air is connected to the filter 18 through the vent hole 25 and undergoes respiratory exchange with external air through the filter 18 to balance a pressure change in the central chamber 21 of the splined pair. This is the breathing function of the splined pair.

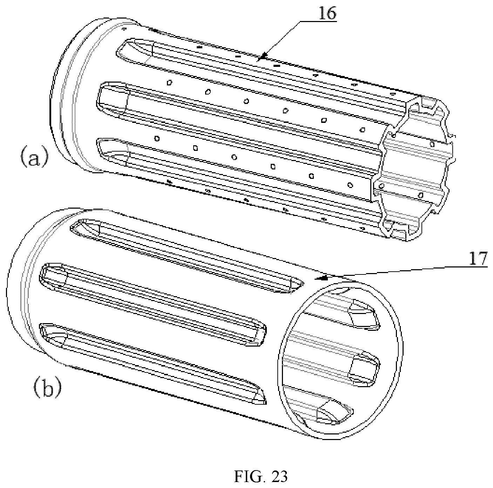

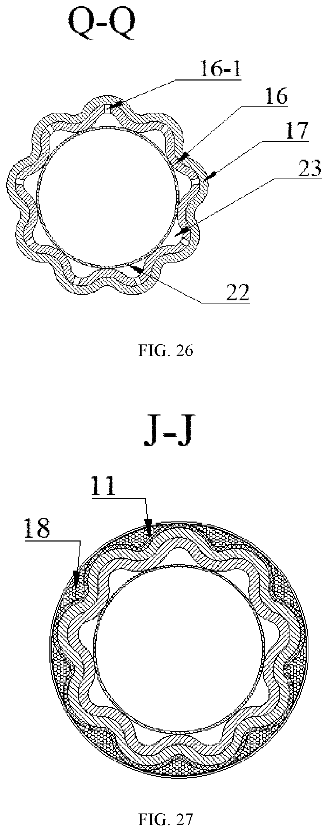

FIG. 22 is a three-dimensional schematic diagram of circular-arc spline shaft and spline sleeve. The concave and convex shapes on the surfaces of the splines are curved surfaces formed by circular-arc surfaces with front and back sides staggered and ends tangent to each other. The cross-section of the spline is quincunxial, as shown in FIGS. 26 and 27. FIG. 23 is a three-dimensional schematic diagram of rectangular spline shaft and spline sleeve, where the spine has a rectangular cross-section. Of course, there can also be other forms of spines, such as trapezoidal splines, involute splines, triangular splines, which will not be exhaustive herein.

Further, nylon can be coated on the sliding surfaces of the splined pair. After the spline shaft or/and spline sleeve are coated with nylon, the lubrication method of the spline oil storage cylinder can be replaced, and the nylon achieves self-lubrication, thereby eliminating the need for structural settings such as the spline oil storage cylinder and oil distribution holes.

### Embodiment 5

Embodiment 5 is a variant of Embodiment 4. As shown in FIG. 25, the difference between this embodiment and Embodiment 4 is as follows. The splined pair further includes oil storage plug 28. The oil storage plug 28 seals one end of the spline oil storage cylinder 22. Oil storage chamber 23 is formed between the spline oil storage cylinder 22, the oil storage plug 28, and the spline shaft 16. The spline shaft 16 is provided with a plurality of oil distribution holes 16-2. The oil distribution holes 16-2 are communicated with the oil storage chamber 23.

In the present disclosure, the closed oil storage chamber 23 is formed between the spline oil storage cylinder 22, the oil storage plug 28, and the inner surface of the spline part of the spline shaft. Meanwhile, there are a plurality of oil distribution holes 16-2 on the outer surface of the spline part of the spline shaft. The outer surface of the spline part of the spline shaft is communicated with the oil storage chamber 23 through the oil distribution holes 16-2. The lubricating oil is stored in the oil storage chamber 23. The spline shaft 16 and the spline sleeve 17 are assembled together through a spline fit to form the splined pair. When the spline shaft 16 slides inside the spline sleeve 17, the lubricating oil in the oil storage chamber 23 reaches the sliding fitting surface of the splined pair through the oil distribution holes 16-2, thereby lubricating the splined pair.

Preferably, one end of the spline oil storage cylinder 22 is provided with horn mouth 22-1. When the spline oil storage cylinder 22 is coaxially nested in the inner chamber of the spline shaft 16, the horn mouth 22-1 seals one end of the inner chamber of the spline part of the spline shaft, and the other end of the spline oil storage cylinder 22 is connected to the oil storage plug 28. Meanwhile, the oil storage plug 28 seals the other end of the inner chamber of the spline part of the spline shaft, thereby forming the closed oil storage chamber 23 between the splined oil storage cylinder, the oil storage plug, and the inner surface of the spline part of the spline shaft.

As shown in FIG. 25, the splined pair is further provided with spline dust cover 19. The spline dust cover 19 includes one end fixedly connected to the spline shaft 16 and the other end connected to the spline sleeve 17.

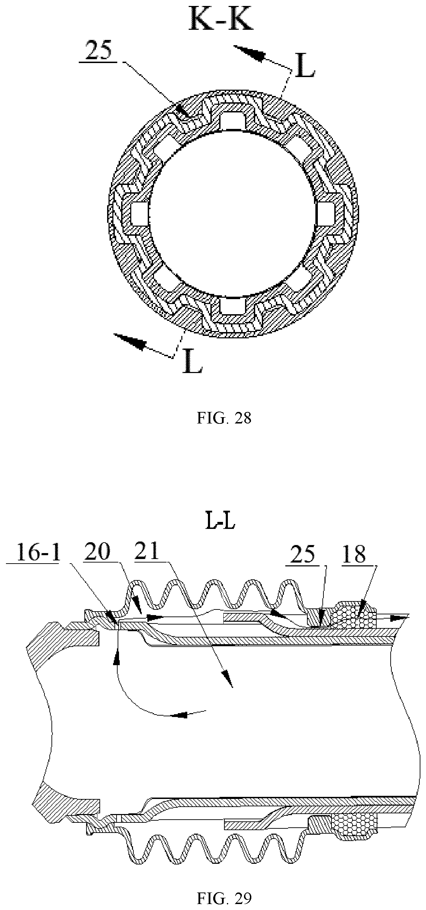

As shown in FIG. 29, the end of the spline dust cover 19 connected to the spline sleeve 17 is provided with vent hole 25 and filter 18. The end of the spline shaft 16 away from the spline sleeve 17 is provided with exhaust hole 16-1. The exhaust hole 16-1 includes one end communicated with inner chamber 20 of the spline dust cover 19 and the other end communicated with central chamber 21 of the splined pair. Air in the central chamber 21 of the splined pair is connected to the inner chamber 20 of the spline dust cover 19 through the exhaust hole 16-1 of the spline shaft 16. Further, the air is connected to the filter 18 through the vent hole 25 and undergoes respiratory exchange with external air through the filter 18 to balance a pressure change in the central chamber 21 of the splined pair. This is the breathing function of the splined pair.

### Embodiment 6

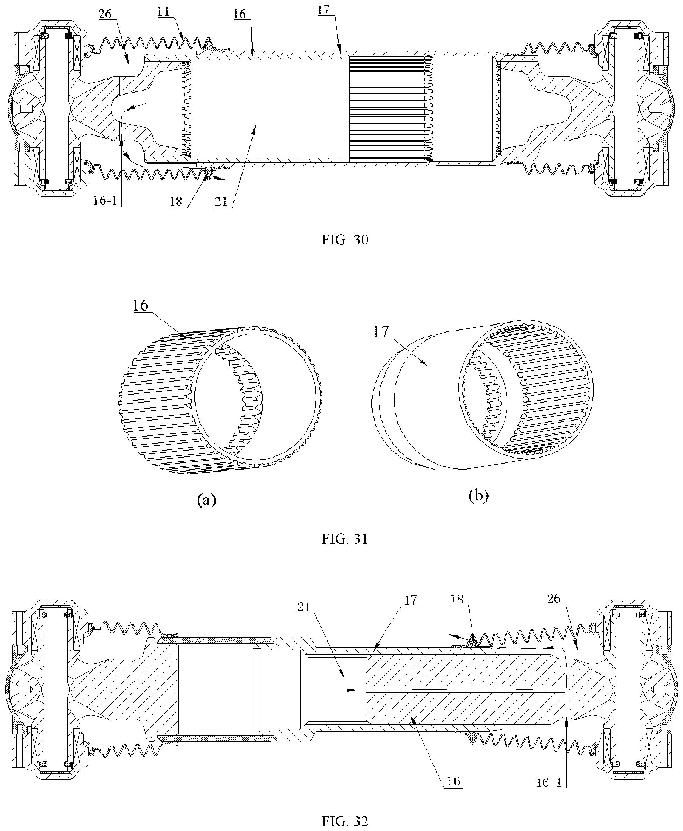

Embodiment 6 is another variant of Embodiment 4. As shown in FIGS. 30 and 31, a lightweight splined pair includes spline shaft 16 and spline sleeve 17. The spline shaft 16 and the spline sleeve 17 are thin-walled structures. The spline shaft 16 and the spline sleeve 17 form the sliding splined pair through an involute spline fit. The spline shaft 16 and the spline sleeve 17 are provided with involute splines. An end of the spline shaft 16 is provided with internal splines, which are fixedly connected to the external splines at a shank of a ball at one end of a propeller shaft (as shown in FIG. 7) and reinforced by welding. One end of the spline sleeve 17 is in a sliding fit with the external splines of the spline shaft 16 through the internal splines, while the other end of the spline sleeve 17 is fixedly connected to the external splines at the shank of the ball at the other end of the propeller shaft through the internal spline (as shown in FIG. 7) and reinforced by welding. The connection strength between the spline shaft 16, the spline sleeve 17, and the shank of the ball of the propeller shaft is improved by fixing the spline shaft 16, the spline sleeve 17, and the shank of the ball of the propeller shaft through the internal splines and the external splines and welding them together.

Preferably, the splined pair is provided with dust cover 11. One end of the dust cover 11 is fixedly connected to the sealing port T of the main body of the socket, and the other end of the dust cover 11 is connected to the spline sleeve 17. Alternatively, the splined pair is further provided with spline dust cover 19. The spline dust cover 19 includes one end fixedly connected to the spline shaft 16 and the other end connected to the spline sleeve 17.

### Embodiment 7

As shown in FIGS. 24, 25, and 30, a lightweight propeller shaft includes a pair of lightweight universal joints and/or a lightweight splined pair. The lightweight universal joint is the lightweight universal joint described in any one of Embodiments 1 to 3, and/or the lightweight splined pair is the lightweight splined pair described in any one of Embodiments 4 to 6.

In the present disclosure, the socket and the splined pair of the lightweight propeller shaft are integrated thin-walled structures, achieving chipless or partial chipless machining, greatly improving production efficiency and quality stability, and significantly reducing the parts weight and processing costs. The present disclosure reduces the weight by about 40-70%, saving a large amount of steel, adapting to the lightweight development requirements of automobile components, greatly improving product performance and component fitting accuracy, and reducing vibration and noise of the propeller shaft.

### Embodiment 8

The lightweight universal joint in Embodiment 7 can be equivalently replaced with a traditional cross-shaft universal joint or ball-cage universal joint, which will not be elaborated herein.

### Embodiment 9

The lightweight splined pair in Embodiment 7 can be equivalently replaced with a traditional spline shaft and spline sleeve structure, as shown in FIG. 32, which will not be elaborated herein. In this embodiment, the spline shaft 16 is integrated with the ball 1, and the exhaust hole 16-1 is formed on the spline shaft 16. Due to the integrated design of the spline shaft 16 and the ball 1, the shank of the ball 1 is a part of the ball 1 and the spline shaft. In this way, the exhaust hole 16-1 of the ball can also be described as the exhaust hole 16-1 of the spline shaft 16. Preferably, one end of the spline sleeve 17 away from the spline shaft 16 is connected to the other ball 1 through a shaft tube.

## Claims

1. A lightweight universal joint, comprising a socket (3), a ball (1), and a straight shaft (2), wherein the ball (1) is rotatably provided in the socket (3), and the ball (1) is provided with a transmission hole; the straight shaft (2) runs through the transmission hole and a center (R) of the ball;
**characterized in that**
the socket (3) is a thin-walled structure with a wall thickness of 0.2 mm-5 mm; and
two ends of the socket (3) are externally connected to fixed wings (8) for transferring a torque, respectively, such that the socket (3) is not configured to transfer a transmission torque; and each of the fixed wings (8) is provided with a carrying hole (8-1) and a transmission key (8-2).

2. The lightweight universal joint according to claim 1, **characterized in that** the socket (3) is an integrated thin-walledstructure or a split thin-walled structure.

3. The lightweight universal joint according to claim 2, **characterized by** further comprising rolling elements (7), wherein the rolling elements (7) are arranged at two ends of the straight shaft (2), respectively; two ends of the transmission hole are provided with raceway surfaces (1-1), respectively; outer surfaces of the rolling elements (7) are fit with the raceway surfaces (1-1) of the transmission hole to transfer the torque; and the rolling elements (7) are configured to rotate around an axis of the straight shaft and roll on the raceway surfaces (1-1) of the transmission hole.

4. The lightweight universal joint according to claim 3, **characterized in that** the outer surfaces of the rolling elements (7) form conical surfaces (7-2), respectively; the conical surfaces (7-2) of the rolling elements (7) are fit with the raceway surfaces (1-1) of the transmission hole, along a straight-line contact generatrix (M); and an extension line of the contact generatrix (M) passes through the center (R) of the ball (1).

5. The lightweight universal joint according to claim 4, **characterized by** further comprising limiting mechanisms for axially limiting the rolling elements (7).

6. The lightweight universal joint according to claim 5, **characterized by** further comprising axial support mechanisms for axial support and positioning of the straight shaft.

7. The lightweight universal joint according to claim 5, **characterized in that** the socket (3) is the integrated thin-walledstructure; the socket (3) is provided with two insertion holes (3-1) arranged symmetrically, and the fixed wings (8) are provided with insertion openings (8-3), respectively; the insertion openings (8-3) are inserted into the insertion holes (3-1); and the straight shaft (2) is rotatably supported in the carrying holes (8-1) of the fixed wings (8).

8. The lightweight universal joint according to claim 7, **characterized in that** the socket (3) is integrally formed by injection molding.

9. The lightweight universal joint according to any one of claims 1 to 8, **characterized in that** a middle part of the straight shaft (2) is provided with a positioning spherical surface (2-1); a middle part of the transmission hole of the ball (1) is provided with a constraint surface (1-2); and the positioning spherical surface (2-1) is restricted to fit within the constraint surface (1-2) of the transmission hole.

10. A lightweight splined pair, **characterized by** comprising a universal joint according to any of the precedent claims, and further comprising a spline shaft (16) and a spline sleeve (17), wherein the spline shaft (16) and the spline sleeve (17) are thin-walled structures; and the spline shaft (16) and the spline sleeve (17) form a sliding splined pair through a spline fit.

11. The lightweight splined pair according to claim 10, **characterized in that** an end of the spline shaft is provided with internal splines, and the spline shaft is fixedly connected to corresponding external splines at a shank of a ball at one end of a propeller shaft through the internal splines of the spline shaft; an outer part of the spline shaft is provided with external splines; the external splines of the spline shaft form a sliding fit with internal splines at one end of the spline sleeve; and the other end of the spline sleeve is fixedly connected to corresponding external splines at a shank of a ball at the other end of the propeller shaft through internal splines of the other end of the spline sleeve.

12. The lightweight splined pair according to claim 10, **characterized by** further comprising a spline oil storage cylinder (22), wherein the spline oil storage cylinder (22) is nested in an inner chamber of the spline shaft (16) to form an oil storage chamber (23); the spline shaft (16) is provided with a plurality of oil distribution holes (16-2); and the oil distribution holes (16-2) are communicated with the oil storage chamber (23).

13. A lightweight propeller shaft, **characterized by** comprising a universal joint and/or a splined pair, wherein the universal joint is the lightweight universal joint according to any one of claims 1 to 9; and/or the splined pair is the lightweight splined pair according to any one of claims 10 to 12.

14. The lightweight propeller shaft according to claim 13, **characterized in that** the socket of the lightweight universal joint is provided with a sealing port (T); the sealing port (T) is connected to a dust cover (11); and one end of the dust cover (11) is connected to the sealing port (T), and the other end of the dust cover (11) is connected to the shank of the ball (1) or the spline sleeve of the propeller shaft.

15. The lightweight propeller shaft according to claim 14, **characterized in that** the end of the dust cover (11) connected to the spline sleeve (17) or the shank of the ball is provided with a filter (18); the ball is provided with an exhaust hole (16-1); and an inner chamber (26) of the dust cover (11) is communicated with a central chamber (21) of the splined pair through the exhaust hole (16-1), such that external air enters the inner chamber (26) of the dust cover (11) after being filtered by the filter (18).

## Patentansprüche

1. Leichtes Kreuzgelenk, umfassend eine Pfanne (3), eine Kugel (1) und eine gerade Welle (2), wobei die Kugel (1) drehbar in der Pfanne (3) bereitgestellt ist und die Kugel (1) mit einem Übertragungsloch versehen ist; wobei die gerade Welle (2) durch das Übertragungsloch und eine Mitte (R) der Kugel verläuft;
**dadurch gekennzeichnet, dass**
die Pfanne (3) eine dünnwandige Struktur mit einer Wandstärke von 0,2 mm bis 5 mm ist; und
zwei Enden der Pfanne (3) außen mit fest angeordneten Flügeln (8) verbunden sind, um jeweils ein Drehmoment zu übertragen, derart, dass die Pfanne (3) nicht zum Übertragen eines Übertragungsdrehmoments konfiguriert ist; und wobei jeder der fest angeordneten Flügel (8) mit einem Trageloch (8-1) und einem Übertragungskeil (8-2) versehen ist.

2. Leichtes Kreuzgelenk nach Anspruch 1, **dadurch gekennzeichnet, dass** die Pfanne (3) eine einteilige dünnwandige Struktur oder eine geteilte dünnwandige Struktur ist.

3. Leichtes Kreuzgelenk nach Anspruch 2, ferner **gekennzeichnet durch** Rollelemente (7), wobei die Rollelemente (7) jeweils an den beiden Enden der geraden Welle (2) angeordnet sind; wobei zwei Enden des Übertragungslochs mit Laufringflächen (1-1) versehen sind; Außenflächen der Rollelemente (7) mit den Laufringflächen (1-1) des Übertragungslochs zusammengefügt sind, um das Drehmoment zu übertragen; und die Rollelemente (7) dazu konfiguriert sind, sich um eine Achse der geraden Welle zu drehen und auf den Laufringflächen (1-1) des Übertragungslochs zu rollen.

4. Leichtes Kreuzgelenk nach Anspruch 3, **dadurch gekennzeichnet, dass** die Außenflächen der Rollelemente (7) jeweils konische Flächen (7-2) bilden; die konischen Flächen (7-2) der Rollelemente (7) mit den Laufringflächen (1-1) des Übertragungslochs entlang einer geradlinigen Kontaktgeneratrix (M) zusammengefügt sind, um das Drehmoment zu übertragen; und eine Verlängerungslinie der Kontaktgeneratrix (M) durch die Mitte (R) der Kugel (1) verläuft.

5. Leichtes Kreuzgelenk nach Anspruch 4, ferner **gekennzeichnet durch** Einschränkungsmechanismen zum axialen Einschränken der Rollelemente (7).

6. Leichtes Kreuzgelenk nach Anspruch 5, ferner **gekennzeichnet durch** axiale Trägermechanismen zum axialen Tragen und Positionieren der geraden Welle.

7. Leichtes Kreuzgelenk nach Anspruch 5, **dadurch gekennzeichnet, dass** die Pfanne (3) die einteilige dünnwandige Struktur ist; die Pfanne (3) mit zwei symmetrisch angeordneten Einführlöchern (3-1) versehen ist und die fest angeordneten Flügel (8) jeweils mit Einführöffnungen (8-3) versehen sind; wobei die Einführöffnungen (8-3) in die Einführlöcher (3-1) eingeführt sind; und die gerade Welle (2) drehbar in den Tragelöchern (8-1) der fest angeordneten Flügel (8) getragen wird.

8. Leichtes Kreuzgelenk nach Anspruch 7, **dadurch gekennzeichnet, dass** die Pfanne (3) durch Spritzgießen einstückig gebildet ist.

9. Leichtes Kreuzgelenk nach einem der Ansprüche 1 bis 8, **dadurch gekennzeichnet, dass** ein mittlerer Teil der geraden Welle (2) mit einer kugelförmigen Positionierungsfläche (2-1) versehen ist; ein mittlerer Teil des Übertragungslochs der Kugel (1) mit einer Festhaltefläche (1-2) versehen ist; und die kugelförmige Positionierungsfläche (2-1) so eingeschränkt ist, dass sie in die Festhaltefläche (1-2) des Übertragungslochs eingesetzt ist.

10. Leichtes Keilprofilpaar, **gekennzeichnet durch** ein Kreuzgelenk nach einem der vorangehenden Ansprüche und ferner umfassend eine Keilwelle (16) und eine Keilbuchse (17), wobei die Keilwelle (16) und die Keilbuchse (17) dünnwandige Strukturen sind; und die Keilwelle (16) und die Keilbuchse (17) durch Verkeilung ein gleitendes Keilprofilpaar bilden.

11. Leichtes Keilprofilpaar nach Anspruch 10, **dadurch gekennzeichnet, dass** ein Ende der Keilwelle mit Innenkeilen versehen ist und die Keilwelle durch die Innenkeile der Keilwelle mit entsprechenden Außenkeilen an einem Schaft einer Kugel an einem Ende einer Kardanwelle fest verbunden ist; ein äußerer Teil der Keilwelle mit Außenkeilen versehen ist; die Außenkeile der Keilwelle eine Gleitpassung mit Innenkeilen an einem Ende der Keilbuchse bilden; und das andere Ende der Keilbuchse durch Innenkeile des anderen Endes der Keilbuchse fest mit entsprechenden Außenkeilen an einem Schaft einer Kugel am anderen Ende der Kardanwelle verbunden ist.

12. Leichtes Keilprofilpaar nach Anspruch 10, ferner **gekennzeichnet durch** einen Keilprofilöllagerungszylinder (22), wobei der Keilprofilöllagerungszylinder (22) in einer Innenkammer der Keilwelle (16) sitzt, um eine Öllagerungskammer (23) zu bilden; die Keilwelle (16) mit einer Vielzahl von Ölverteilungslöchern (16-2) versehen ist; und die Ölverteilungslöcher (16-2) mit der Öllagerungskammer (23) in Verbindung stehen.

13. Leichte Kardanwelle, **gekennzeichnet durch** ein Kreuzgelenk und/oder ein Keilprofilpaar, wobei das Kreuzgelenk das leichte Kreuzgelenk nach einem der Ansprüche 1 bis 9 ist; und/oder das Keilprofilpaar das leichte Keilprofilpaar nach einem der Ansprüche 10 bis 12 ist.

14. Leichte Kardanwelle nach Anspruch 13, **dadurch gekennzeichnet, dass** die Pfanne des leichten Kreuzgelenks mit einer Verschlussöffnung (T) versehen ist; die Verschlussöffnung (T) mit einer Staubabdeckung (11) verbunden ist; und ein Ende der Staubabdeckung (11) mit der Verschlussöffnung (T) verbunden ist und das andere Ende der Staubabdeckung (11) mit dem Schaft der Kugel (1) oder der Keilbuchse der Kardanwelle verbunden ist.

15. Leichte Kardanwelle nach Anspruch 14, **dadurch gekennzeichnet, dass** das Ende der Staubabdeckung (11), das mit der Keilbuchse (17) oder dem Schaft der Kugel verbunden ist, mit einem Filter (18) versehen ist; die Kugel mit einer Ablassöffnung (16-1) versehen ist; und die Innenkammer (26) der Staubabdeckung (11) durch die Ablassöffnung (16-1) mit einer zentralen Kammer (21) des Keilprofilpaars in Verbindung steht, derart, dass Luft nach dem Filtern durch den Filter (18) in die Innenkammer (26) der Staubabdeckung (11) gelangt.

## Revendications

1. Une articulation universelle légère, comprenant une douille (3), une bille (1) et un arbre droit (2), dans laquelle la bille (1) est disposée de manière rotative dans la douille (3), et la bille (1) est dotée d'un trou de transmission ; l'arbre droit (2) passe par le trou de transmission et un centre (R) de la bille ;
**caractérisée en ce que** :
la douille (3) est une structure à paroi fine avec une épaisseur de paroi de 0,2 mm à 5 mm ; et
deux extrémités de la douille (3) sont reliées extérieurement à des ailes fixes (8) pour transférer un couple, respectivement, de sorte que la douille (3) n'est pas configurée pour transférer un couple de transmission ; et chacune des ailes fixes (8) est dotée d'un trou de portage (8-1) et d'une clé de transmission (8-2).

2. Articulation universelle légère selon la revendication 1, **caractérisée en ce que** la douille (3) est une structure à paroi fine intégrée ou une structure à paroi fine fendue.

3. Articulation universelle légère selon la revendication 2, **caractérisée en ce qu'**elle comprend en outre des éléments roulants (7), dans laquelle les éléments roulants (7) sont disposés respectivement à deux extrémités de l'arbre droit (2) ; les deux extrémités du trou de transmission sont ornées de surfaces de passage (1-1), respectivement ; les surfaces extérieures des éléments roulants (7) sont fixées avec les surfaces de passage (1-1) du trou de transmission pour transférer le couple ; et les éléments roulants (7) sont configurés pour tourner autour d'un axe de l'arbre droit et rouler sur les surfaces de passage (1-1) du trou de transmission.

4. Articulation universelle légère selon la revendication 3, **caractérisée en ce que** les surfaces extérieures des éléments roulants (7) forment respectivement des surfaces coniques (7-2) ; les surfaces coniques (7-2) des éléments de roulement (7) sont ajustées aux surfaces du circuit (1-1) du trou de transmission, le long d'un générateur de contact en ligne droite (M) ; et une droite d'extension de la génératrice de contact (M) passe par le centre (R) de la bille (1).

5. Articulation universelle légère selon la revendication 4, **caractérisée en ce qu'**elle comprend en outre des mécanismes de limitation pour la limitation axiale des éléments de roulement (7).

6. Articulation universelle légère selon la revendication 5, **caractérisée en ce qu'**elle comprend en outre des mécanismes de support axial pour le support axial et le positionnement de l'arbre droit.

7. Articulation universelle légère selon la revendication 5, **caractérisée en ce que** la douille (3) est une structure à paroi fine intégrée ; la douille (3) est dotée de deux trous d'insertion (3-1) disposés de manière symétrique, et les ailes fixes (8) sont dotées d'ouvertures d'insertion (8-3), respectivement ; les ouvertures d'insertion (8-3) sont insérées dans les trous d'insertion (3-1) ; et l'arbre droit (2) est soutenu de manière rotative dans les trous de portage (8-1) des ailes fixes (8).

8. Articulation universelle légère selon la revendication 7, **caractérisée en ce que** la douille (3) est entièrement formée par moulage par injection.

9. Articulation universelle légère selon l'une des revendications 1 à 8, **caractérisée en ce qu'**une partie centrale de l'arbre droit (2) est dotée d'une surface sphérique de positionnement (2-1) ; une partie centrale du trou de transmission de la bille (1) est dotée d'une surface de contrainte (1-2) ; et la surface sphérique de positionnement (2-1) est restreinte pour s'adapter à la surface de contrainte (1-2) du trou de transmission.

10. Paire rainurée légère, **caractérisée en ce qu'**elle comprend une articulation universelle selon l'une quelconque des revendications précédentes, et comprenant en outre un arbre rainuré (16) et un manchon rainuré (17), dans laquelle l'arbre rainuré (16) et le manchon rainuré (17) sont des structures à paroi fine ; et l'arbre rainuré (16) et le manchon rainuré (17) forment une paire rainurée coulissante via un ajustement rainuré.

11. Paire rainurée légère selon la revendication 10, **caractérisée en ce qu'**une extrémité de l'arbre rainuré est dotée de rainures internes, et l'arbre rainuré est fixement relié aux rainures externes correspondantes à une tige d'une bille à une extrémité de l'arbre d'hélice via les rainures internes de l'arbre rainuré ; une partie extérieure de l'axe de rainures est dotée de rainures externes ; les rainures externes de l'arbre forment un ajustement coulissant avec des rainures internes à une extrémité de la manchon à rainures ; et l'autre extrémité du manchon rainuré est fixement reliée aux rainures externes correspondantes à une tige d'une bille à l'autre extrémité de l'arbre d'hélice, via des rainures internes de l'autre extrémité du manchon rainuré.

12. Paire rainurée légère selon la revendication 10, **caractérisée en ce qu'**elle comprend en outre un cylindre de stockage d'huile à rainures (22), dans laquelle le cylindre de stockage d'huile à rainures (22) est imbriqué dans une chambre intérieure de l'arbre rainuré (16) pour former une chambre de stockage d'huile (23) ; l'arbre rainuré (16) est doté d'une pluralité de trous de distribution d'huile (16-2) ; et les trous de distribution d'huile (16-2) sont en communication avec la chambre de stockage d'huile (23).

13. Arbre d'hélice léger, **caractérisé en ce qu'**il comprend un joint universel et/ou une paire rainurée, dans lequel l'articulation universelle est l'articulation universelle légère selon l'une des revendications 1 à 9 ; et/ou la paire rainurée est la paire rainurée légère selon l'une des revendications 10 à 12.

14. Arbre d'hélice léger selon la revendication 13, **caractérisé en ce que** la douille de l'articulation universelle légère est dotée d'un orifice d'étanchéité (T) ; l'orifice d'étanchéité (T) est relié à un cache anti-poussière (11) ; et une extrémité du cache anti-poussière (11) est reliée à l'orifice d'étanchéité (T), et l'autre extrémité du cache anti-poussière (11) est reliée à la tige de la bille (1) ou au manchon rainuré de l'arbre d'hélice.

15. Arbre d'hélice léger selon la revendication 14, **caractérisé en ce que** l'extrémité du cache anti-poussière (11) reliée au manchon rainuré (17) ou à la tige de la bille est dotée d'un filtre (18) ; la bille est dotée d'un trou d'échappement (16-1) ; et une chambre intérieure (26) du cache anti-poussière (11) est en communication avec une chambre centrale (21) de la paire rainurée via le trou d'échappement (16-1), de sorte que l'air extérieur entre dans la chambre intérieure (26) du cache anti-poussière (11) après avoir été filtré par le filtre (18).
